# EUROPEAN PATENT APPLICATION

(11) **EP 1 125 791 A2**
(43) Date of publication of application: **22.08.2001**
(21) Application number: 01301384.2
(22) Date of filing: 16.02.2001
(51) Int. Cl.: B60Q 1/068, F21V 14/04

(54) **A headlamp for vehicles**

(30) Priority: 17.02.2000 CZ 20000560
(71) Applicant: Autopal, s.r.o., Novy Jicin 741 01 (CZ)
(72) Inventor: Neuman, Vilém, Lubina-Koprivnice 742 21 (CZ); Dobrus, Vladimir, Opava 747 05 (CZ); Bill, Karel, Bernartice nad Odrou 742 41 (CZ)
(74) Representative: Godwin, Edgar James

(57) **Abstract**

A headlamp for vehicles having an adjustable reflector (5) which reflector (5) is rotatably mounted on a carrying part (4) by means of locally fixing and adjustable connecting elements, whereby, at least one of the connecting elements is adjustable. The adjustable connecting element comprises an adjusting member (7) provided with a shifting thread (71) and a swinging suspension (6) provided with an internal thread (63). The adjusting member (7) is both radially and axially seating in the carrying part (4). The swinging suspension (6) is rotatably screwed on the shifting thread (71) of the adjusting member (7) by means of the internal thread (63) and connected with the reflector (5) on an axis parallel with the longitudinal axis of the adjusting member (7).

## Description

### Field of the Invention

The present invention relates to a headlamp for vehicles having an adjustable reflector which reflector is rotatable mounted on a carrying part by means of locally fixing and adjustable connecting elements, whereby, at least one of said elements is adjustable.

### Background of the Invention

According to a headlamp design known from the state of the art, a reflector is mounted in a carrying part by means of three and more connecting elements, whereby, at least one of the connecting elements is adjustable. Most frequently, the adjustable connecting element is actuated by means of an adjusting screw. By rotation of the adjusting screw, the adjustable connecting element is shifted out axially along the direction of the adjusting screw axis. By this method, the reflector is rotated around a suitably selected axis in relation to the carrying part. The respective reflector bed connecting the reflector with the adjustable connecting element moves along a part of a circular arch, which arch has its center situated on the axis of the reflector tilting. In this way, a relative radial shift against the movement axis of the adjustable connecting element is achieved, which element moves only in the axial direction. This common radial shift is to be compensated. There are three art methods how to compensate for this shift disclosed in the prior art.

The first method of solving this problem of radial shifting is its compensation by means of a suitably selected clearances, for example between a reflector bed and a connecting element or between a connecting element and an adjusting screw. A disadvantage of this solution are the deteriorated dynamic properties of the reflector mounting when vibrations caused by vehicle running can be further amplified by a mounting having clearances.

The second method of solving this problem of radial shifting is inserting of an appropriately selected flexibility, i.e. of a flexible member made of elastic material, into the system comprising a carrying part, a connecting element and a reflector. By flexibility, the flexible member compensates said radial shift by its flexibility, for example so as it is disclosed in DE-92/420 60 26. A disadvantage of such solutions is that it is difficult to find a compromise between properties of the flexible member, because considering the dynamic properties of the reflector mounting required and especially the taking-up of the vertical forces, it is desirable to use a rather rigid material for the flexible member. But considering the requirement to keep the balance of the relative radial shifts at minimum of parasitic internal forces deforming the reflector, it is desirable to use the softest possible material, especially in case of spatial mounting designs exhibiting big radial shifts. Another disadvantage of such solutions is problematic life cycle of a flexible member. Most frequently, such flexible member is made of plastics. A consequence of this is the necessity to replace the flexible member or to re-adjust the reflector position during operation.

The third method of solving this problem of radial shifting is using of a suitably selected combination of both above mentioned methods in the whole system of reflector mounting, which method limits the above mentioned problems but is not their principal solution.

To reach a long life cycle and good dynamic properties, most of the classic solutions of an adjustable connecting element, apart from an automatic controller for governing of the light incidence distance, separate the functions of taking-up the radial forces and axial direction adjustment. Usually, the actuating member of the connecting element is then radially mounted in a shaped guiding of the bearing part, which guiding prevents angular displacement of the actuating member around its axis and allows its axial movement. Then, rotating a adjusting member controls the axial movement. The adjusting member is provided with a shifting thread. This shifting thread engages with the internal thread provided in the actuating member. The adjusting member is axially firmly mounted in the bearing part. This design causes that the parts used are of complex shape and can bring about complications in production and increase costs.

In case of a headlamp design, where one of the connecting elements is a fixing point which fixing point is firmly connected with the bearing part, i.e. the so called fixing point system, a solution is often used when it is possible to adjust the actuating member of the automatic controller for governing of the light incidence distance also independently, mechanically. In this case, the design of the automatic controller for governing of the light incidence distance is special and more complex one and consequently it is more expensive then the standard one.

### Summary of the Invention

The drawbacks mentioned above are substantially removed in case of a headlamp for vehicles having an adjustable reflector. Reflector is rotatable mounted on a carrying part by means of locally fixing and adjustable connecting elements, whereby, at least one of said connecting elements is adjustable, which consists in that said adjustable connecting element comprises an adjusting member provided with a shifting thread and a swinging suspension provided with an internal thread. Said adjustable member is both radially and axially seating in said carrying part and said swinging suspension is rotatably screwed on said shifting thread of said adjusting member by means of said internal thread and connected with said reflector on an axis parallel with the longitudinal axis of said adjusting member .

In case of this design of the adjustable connecting element it is possible to solve the problem of radial shift in a maximally kinematical way, i.e. to minimize the use of mounting with clearances or flexible members for the system of reflector suspension. The adjustable connecting element is connected with the reflector by an element, which element is fixed in radial and axial directions and free in the tangential direction due to a rotatable mounting of the swinging suspension on the shifting thread of the adjusting member, whereby, its axial position is controlled by rotation of the adjusting member. The connection proper between the adjustable connecting element and the reflector can be carried out as a fixed one and without any clearance. For compensation of common radial shifts it is possible to use the degree of freedom in the tangential direction. This is especially advantageous in case of spatial reflector suspension designs when there are big relative radial shifts that are difficult to eliminate by a flexible member but that are easily compensated by turning the swinging suspension around its axis. This is another advantage of the solution according to this invention, which advantage consists in the possibility of greater freedom in the reflector suspension design, especially by advantageous placing of the connecting elements and thereby by meeting the specific requirements imposed on a headlamp. By a suitable configuration of other connecting elements using minimally one adjustable element according to the invention, it is possible to obtain very good dynamic properties of the reflector suspension system, especially in the vertical direction, where there is a significantly prevailing frequency and amplitude size of the vertical accelerations in car operation. At the same time, such adjustable connecting element is very simple in design and for production. The element does not require any shaped guiding. The reaction moment caused by turning in the thread is caught by mounting of the swinging suspension, which mounting is realized on the shifting thread of the adjusting member and in the reflector bed.

It is advantageous if the swinging suspension, situated on an axis parallel with the longitudinal adjusting member axis, is provided directly with an end for jointed rigid seating with close running fit in the reflector bedding.

Further, it is advantageous if the swinging suspension bears an automatic controller for governing of the light incidence distance, provided with an actuating element fixed by a joint in a second bed of the reflector, which automatic controller is firmly connected with the swinging suspension so that the adjusting axis of the actuating element is parallel with the longitudinal axis of the adjusting member. Such adjustable connecting element exhibits all the above mentioned advantages and simultaneously the element is very suitable for a reflector suspension system provided with a fixed point, keeping open the possibility to use a standard automatic controller for governing of the light incidence distance. The controller is then most often fixed by a bayonet joint into a swinging suspension and independently mechanically adjusted by the axial movement produced by rotating the adjusting member. The above specified solution is advantageous considering the fact that the advanced standard automatic controllers for governing of the light incidence distance exhibit low weight. Therefore, considering the specific building conditions and weight of the automatic controller for governing of the light incidence distance, it is possible to chose such arrangement where the adjustment axis of the actuating member of the automatic controller for governing of the light incidence distance is placed, together with the longitudinal axis of the adjusting member, in a vertical or a horizontal plane. Further, it is advantageous if the longitudinal axis of the adjusting member and the axis of actuation of the actuating member are oriented vertically. In this case, stress acting on the actuating member caused by radial forces acting perpendicularly to the axis of actuation of the actuating member is minimized. Such stress significantly decreases the life cycle of an automatic controller for governing of the light incidence distance and dynamic properties of the whole reflector suspension. The actuating member is so stressed only in the axial direction, due to the swinging suspension and vertical arrangement.

Further, it is advantageous to arrange the design a headlamp according to this invention so that the first adjustable connecting element is provided with a swinging suspension mounted on an axis parallel to the longitudinal axis of the adjusting member, which swinging suspension is provided with an end for jointed rigid seating with close running fit without any clearance in the reflector bed. According to this invention, the other adjustable connecting element is carried out so that the swinging suspension bears an automatic controller for governing of light incidence distance which automatic controller is firmly connected with the suspension so that the adjustment axis of its actuating member placed by a joint in the reflector bed is parallel with the longitudinal axis of the adjusting member and a third connecting element is a fixed point connected with a carrying part on which the reflector is mounted by joints. This solution exhibits all the above mentioned advantages and especially makes possible to achieve a cinematically clean and rigid reflector suspension in the vertical direction exhibiting good dynamic properties combined with its structural simplicity and low price.

### Brief Description of the Drawings

The invention in its various aspects will now be described in greater detail with reference to the attached drawings thereof, in which:
Figure 1 is a perspective view of a headlamp for vehicles having a reflector adjustable by the action of an adjustable connecting mechanism which mechanism is shown in its basic embodiment,
Figure 2 to 4 are perspective views of other embodiments of the adjustable connecting mechanism for a headlamp for vehicles having an adjustable reflector which reflector is also adjustable by the action of an automatic controller for governing of the light incidence distance and
Figure 5 is a perspective view of an embodiment of a headlamp for vehicles having an adjustable reflector using two adjustable connecting mechanisms, an automatic controller for governing of the light incidence distance and a reflector suspension in a fixed point.

### Detailed Description of the Invention

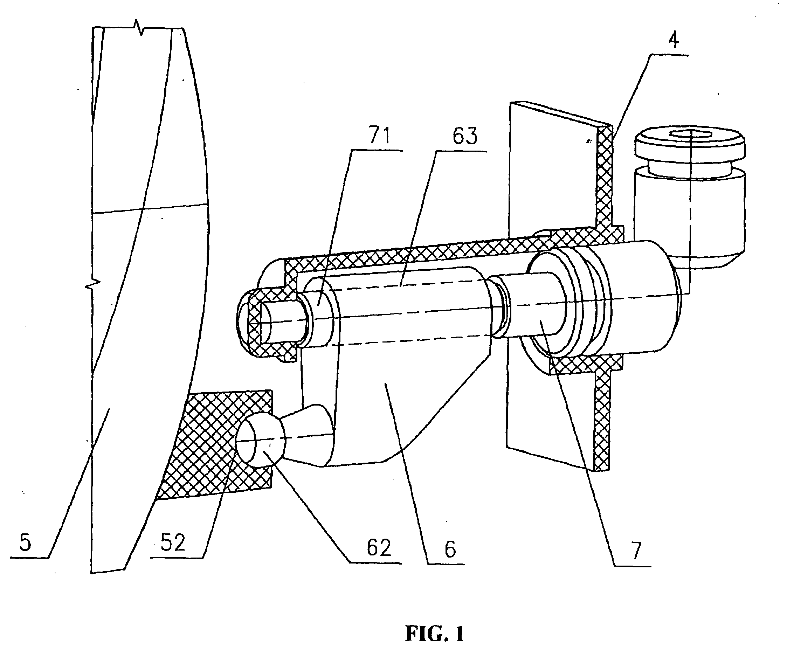

Figure 1 shows an example of a headlamp according to the present invention. By means of an adjustable connecting element, reflector 5 is connected with a carrying part 4. The adjustable connecting element is formed by an adjusting member 7, which adjusting member 7 is provided with a shifting thread 71, both radially and axially situated in the carrying part 4, and with a swinging suspension 6, which swinging suspension 6 is rotatably mounted on the shifting thread 71 of an adjusting member 7 by means of its internal thread 63. The adjusting member 7 is connected with the reflector 5 on an axis parallel with the longitudinal axis of the adjusting member 7. The connection with the reflector 5 is carried out so that an end 62 is formed directly on the swinging suspension 6. By this end 62, it is connected by a joint with the bed 52 of the reflector 5. By rotating the adjusting member 7, the swinging suspension 6 is shifted out in axial direction, whereby, the end 62 is shifted in axial direction, what causes aiming of the reflector 5 around a suitably selected axis. The end 62 of the swinging suspension 6 is fixed both in the axial and the radial directions and has the possibility to move, to aim in the tangential direction. By this, it is able to compensate common relative shifts in the tangential direction, such shifts being caused by movement of the bed 52 of the reflector 5 along the trajectory of the circular arch.

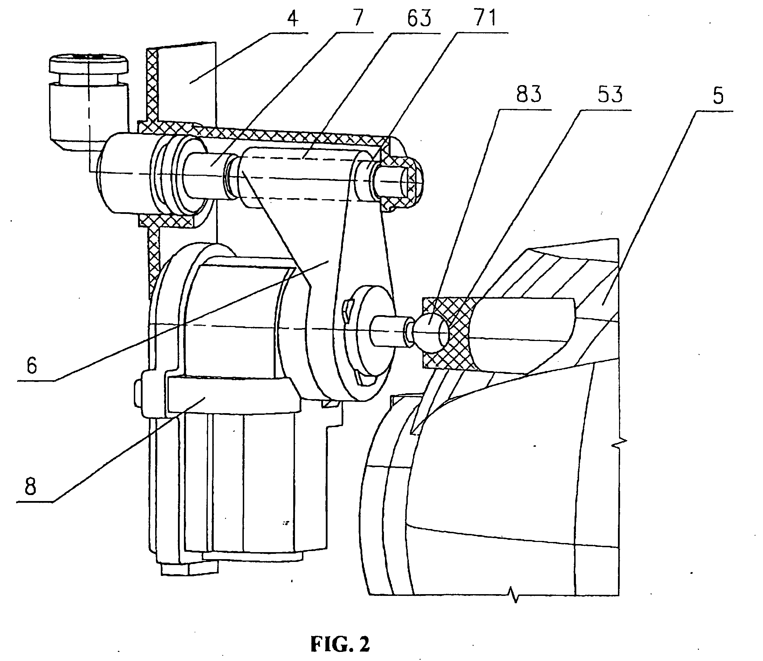

Figure 2 shows another example of a headlamp embodiment according to the present invention where the reflector 5 is connected with the carrying part 4 by means of an adjustable connecting element. The adjustable connecting element comprises a adjusting member 7. The adjusting member 7 is provided with a shifting thread 71 and is both radially and axially mounted in the carrying part 4. Further, the adjustable connecting element comprises a swinging suspension 6, which swinging suspension 6 is rotatable mounted on a shifting thread 71 of the adjusting member 7 by means of its internal thread 63. Further, the swinging suspension 6 is connected with the reflector 5 on an axis parallel with the longitudinal axis of the adjusting member 7. The connection with the reflector 5 is carried out so that the swinging suspension 6 bears an automatic controller 8 for governing of the light incidence distance. Automatic controller 8 is firmly connected with the swinging suspension 6 so that the adjusting axis of its actuating member 83, mounted by a joint in the bed 53 of the reflector 5, is parallel with the longitudinal axis of the adjusting member 7. By turning the adjusting member 7 the swinging suspension 6 is shifted out in axial direction, thereby, the whole automatic controller 8 for governing of the light incidence distance is independently automatically adjusted, including its actuating member 83, in axial direction. Thereby, the reflector 5 is aimed around a suitably selected axis. At the same time, the actuating member 83 can be adjusted in a according to this invention direction during the proper adjusting activity of the automatic controller 8 for governing of the light incidence distance. The actuating member 83 is fixed both in the axial and the radial directions and has possibility to move by turning in the tangential direction, whereby, the actuating member 83 is able to compensate in the tangential direction the common relative shifts originating from movements of the bed 53 of the reflector 5 along the circular arch trajectory. Figure 2 shows a specific example when the axis of adjustment of the actuating member 83 of the automatic controller 8 for governing of the light incidence distance is placed in common vertical plane with the longitudinal axis of the adjusting member 7.

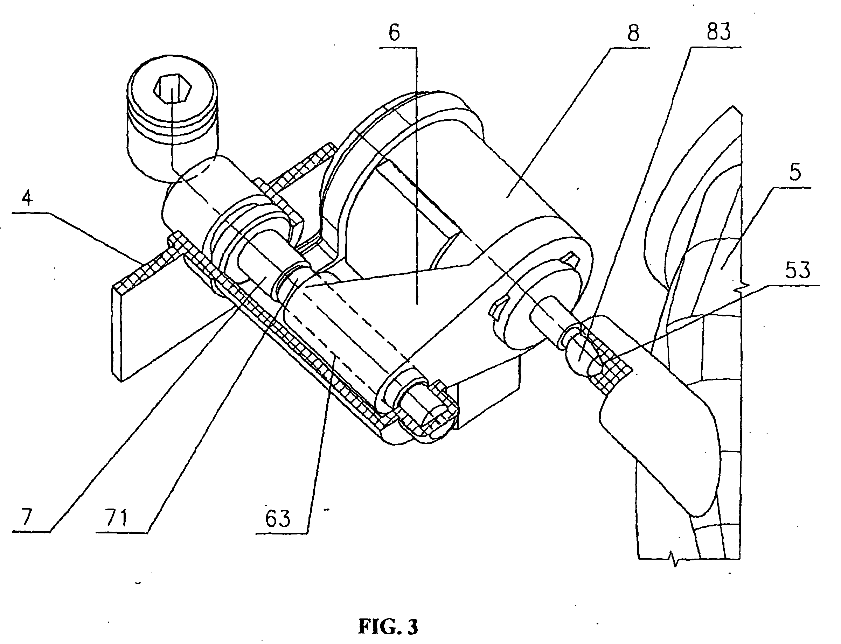

Figure 3 shows an example of a headlamp embodiment according to the present invention similar to that shown in Figure 2. However, in this case the axis of actuating member 83 adjustment of the automatic controller 8 for governing of the light incidence distance is placed in the horizontal plane common with that of the longitudinal axis of the adjusting member 7.

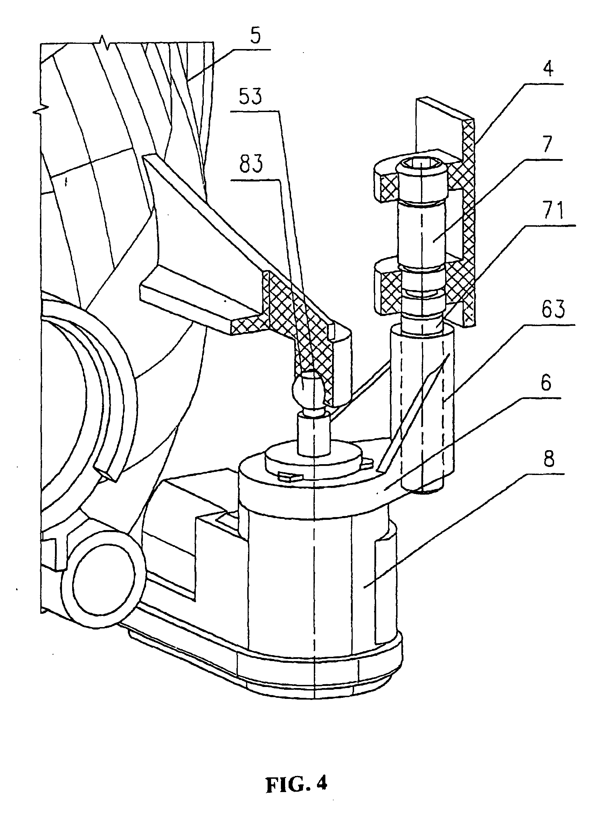

Figure 4 shows an example of a headlamp embodiment according to the present invention similar to that shown in Figure 2. However, in this case the axis of actuating member 83 adjustment of the automatic controller 8 for governing of the light incidence distance is placed in the vertical plane common with that of the longitudinal axis of the adjusting member 7.

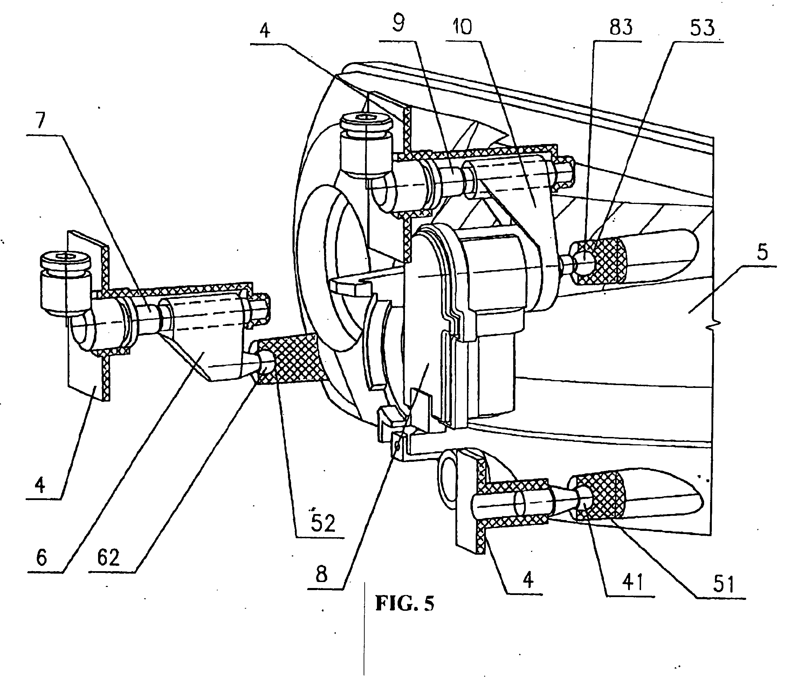

Figure 5 shows an example of a headlamp embodiment according to the present invention where the reflector 5 is connected with the carrying part 4 by means of two adjustable connecting elements and one fixing connecting element. The first adjustable connecting element is carried out according to the Figure 1. The element is connected by a joint, but without any clearance, at its end 62 in the bed 52 of the reflector 5. By rotating of its adjusting member 7 it is possible to aim the reflector 5 in the horizontal plane. The other adjustable connecting element is realized similarly to that one shown in Figure 2. By means of an actuating member 83 of the automatic controller 8 for governing of the light incidence distance the other adjustable connecting element is seated by a joint in a bed 53 of the reflector 5. By turning of its second adjusting member 9, it is possible to aim the reflector 5 in the vertical plane. The fixing connecting element is realized out so as the fixed point 41 connected with the carrying part 4, which fixed point 41 is connected by a joint with the third bed 51 of the reflector 5. Aiming axes of the reflector 5 always pass through the fixed point 41. Adjusting members 7 and 9 can be the same parts, but they don't have to be.

## Claims

1. A headlamp for vehicles having an adjustable reflector (5), which reflector (5) is rotatable mounted on a carrying part (4) by means of locally fixing and adjustable connecting elements, whereby, at least one of said connecting elements is adjustable,
characterized in that said adjustable connecting element comprises an adjusting member (7) provided with a shifting thread (71) and a swinging suspension (6) provided with an internal thread (63), whereby, said adjusting member (7) is both radially and axially seating in said carrying part (4), and whereby, said swinging suspension (6) is rotatably screwed on said shifting thread (71) of said adjusting member (7) by means of said internal thread (63) and connected with said reflector (5) on an axis parallel with the longitudinal axis of said adjusting member (7).

2. A headlamp for vehicles according to Claim 1 **characterized in tha**t said swinging suspension (6) is provided with an end (62), whereby, at said end (62) said swinging suspension (6) is connected by a joint with a bed (52) of said reflector (5).

3. A headlamp for vehicles according to Claim 1 **characterized in that** said swinging suspension (6) is provided with an automatic controller (8) for governing of the light incidence distance. Automatic controller (8) is firmly connected with said swinging suspension (6) and provided with an actuating member (83) fixed by a joint in a second bed (53) of reflector (5), whereby, the axis of actuating shift of said actuating member (83) is parallel with the longitudinal axis of said adjusting member (7,9).

4. A headlamp for vehicles according to Claim 3 **characterized in that** said axis of actuating shift of said actuating member (83) of said automatic controller (8) for governing of the light incidence distance and said longitudinal axis of said adjusting member (7,9) are situated in a common vertical plane.

5. A headlamp for vehicles according to Claim 3 **characterizedin that** said axis of actuating shift of said actuating member (83) of said automatic controller (8) for governing of the light incidence distance and said longitudinal axis of said adjusting member (7,9) are both situated in a common horizontal plane.

6. A headlamp for vehicles according to Claim 3 **characterized in that** said longitudinal axis of said adjusting member (7,9) is oriented vertically.

7. A headlamp for vehicles according to Claim 2 and anyone of Claims 3 to 6
**characterized in that** said reflector (5) is provided with a third bed (51), whereby, said reflector (5) is connected by a joint jointed in said third bed (51) in a fixed point (41), which fixed point (41) is firmly connected with said carrying part (4).
